# EUROPÄISCHE PATENTANMELDUNG

(11) **EP 4 124 399 A1**
(43) Veröffentlichungstag der Anmeldung: **01.02.2023**
(21) Anmeldenummer: 22185449.0
(22) Anmeldetag: 18.07.2022
(51) Int. Cl.: B21D 28/02, B21D 28/22, H02K 15/02, H02K 1/28, H02K 7/00

(54) **VERFAHREN ZUR HERSTELLUNG EINES ROTORPAKETS**

(30) Priorität: 28.07.2021 DE 102021208163
(71) Anmelder: VOLKSWAGEN AG, 38440 Wolfsburg (DE)
(72) Erfinder: Prokoph, Stefan, 34295 Edermünde (DE)

(57) **Zusammenfassung**

Die Erfindung betrifft ein Verfahren zur Herstellung eines aus mehreren Rotorlamellen (3) bestehenden Rotorpakets, wobei über mehrere aufeinanderfolgende Stanzstufen (8, 9, 11) je zu erzeugender Rotorlamelle (3) Behelfsöffnungen (4) im Bereich eines Umfangs (5) eines zentrischen Kernlochs (6) der Rotorlamellen (3) sowie zumindest eine sich vom Umfang (5) des Kernlochs (6) radial nach innen erstreckende Feder (7) freigelegt werden, wobei das Freilegen durch Trennen mittels wenigstens eines Stanzwerkzeugs (10, 12) der Stanzvorrichtung (20) in dem Elektroblech (2) erfolgt. Darüber hinaus wird eine jeweilige Rotorlamelle (3) in einer Ausstanzstufe (8) über ein Stanzwerkzeug der Stanzvorrichtung (20) aus dem Elektroblech (2) getrennt und auf das Trennen folgend zumindest eine Teilmenge der Rotorlamellen (3) gedreht und die Rotorlamellen (3) gestapelt. Dabei erfolgt das in einer einzigen Federstanzstufe (9) mittels eines Federstanzwerkzeugs (10) ausgeführte Freilegen einer jeden Feder (7) getrennt von dem in einer einzigen Freistanzstufe (11) mittels eines Freistanzwerkzeugs (12) ausgeführten Freilegen der Behelfsöffnungen (4), wobei die Federstanzstufe (9) der Freistanzstufe (11) nacheilt. Ferner fallen hierbei alle in der Federstanzstufe (9) über das Federstanzwerkzeug (10) ausbildbaren Positionen (13) einer jeder Feder (7) mit in der Freistanzstufe (11) über das Freistanzwerkzeug (12) ausbildbaren Positionen (13) der Behelfsöffnungen (4) zusammen.

## Beschreibung

Die Erfindung betrifft ein Verfahren zur Herstellung eines Rotorpakets eines Rotors einer elektrischen Maschine, wobei das Rotorpaket durch stapelndes Aneinanderreihen einer Vielzahl an in mehreren aufeinanderfolgenden Stanzstufen zumindest einer Stanzvorrichtung aus einem Elektroblech getrennten Rotorlamellen erzeugt wird. Hierfür werden über die Stanzstufen je zu erzeugender Rotorlamelle Behelfsöffnungen im Bereich eines Umfangs eines zentrischen Kernlochs der Rotorlamellen sowie zumindest eine sich vom Umfang des Kernlochs radial nach innen erstreckende Feder freigelegt. Dabei eilt eine jede die Behelfsöffnungen freilegende Stanzstufe einer das Kernloch freilegenden Stanzstufe vor, wobei das Freilegen durch Trennen mittels wenigstens eines Stanzwerkzeugs der Stanzvorrichtung in dem Elektroblech erfolgt. Weiterhin wird eine jeweilige Rotorlamelle in einer Ausstanzstufe über ein Stanzwerkzeug der Stanzvorrichtung aus dem Elektroblech getrennt, wobei auf das Trennen folgend zumindest eine Teilmenge der Rotorlamellen gedreht und die Rotorlamellen gestapelt werden.

Bei permanentmagneterregten elektrischen Maschinen und hierbei im Speziellen Elektromotoren wie den bürstenlosen Gleichstrommotoren treten, aufgrund der spezifischen Anordnung der Pole und Permanentmagnete im Stator und/oder Rotor, Rastmomente zwischen Stator und Rotor auf. Die Rastmomente sind - außer z. B. in Schrittmotoren - in der Regel unerwünscht, da diese eine als nachteilig anzusehende Drehmomentenwelligkeit und eine damit verbundene Laufunruhe der elektrischen Maschine verursachen.

Eine Möglichkeit, die Drehmomentenwelligkeit zu minimieren, besteht darin, eine Schrägung des Rotors der elektrischen Maschine vorzusehen. In der Regel werden hierfür in Schlitzungen des Rotorpakets einzubringende Permanentmagnete mit einem Winkelversatz zueinander im Rotorpaket angeordnet. Der Winkelversatz wird dabei für gewöhnlich über eine Segmentierung des Rotorpakets etabliert, wobei die die Permanentmagnete aufnehmenden Schlitzungen der einzelnen Segmente in Höhe des Winkelversatzes zueinander im Rotorpaket ausgerichtet sind. Die Ausrichtung lässt sich dabei im einfachsten Fall durch Verdrehung der aus einer Vielzahl an aufeinandergestapelten Blechlamellen bestehenden Segmente zueinander erreichen.

Eine Problemstellung, welche sich bei einem gleichgerichteten Stapeln der Blechlamellen zum Rotorpaket oder zu Segmenten des Rotorpakets ergibt, liegt in der für gewöhnlich vorliegenden ungleichmäßigen Dickenverteilung des zur Herstellung der Blechlamellen verwendeten Elektroblechs. Diese wird dabei durch den zur Erzeugung des Elektroblechs verwendeten Walzprozess bedingt und resultiert in Kippfehlern innerhalb des Rotorpakets. Diese äußern sich beispielsweise in in radiale Richtung des Rotorpakets vorliegenden Längenabweichungen und/oder in Längsrichtung des Rotorpakets vorliegenden unterschiedlichen radialen Ausdehnungen. Diese führen unweigerlich zu Unwuchten und einem unruhigen Lauf des Rotors und somit der elektrischen Maschine. Zudem entstehen aufgrund des Walzprozesses magnetische Vorzugsrichtungen im Elektroblech, die ebenfalls in einem unruhigen Lauf der elektrischen Maschine münden.

In diesem Zusammenhang ist der US 5 649 349 A ein Verfahren zur Fertigung von Rotorpaketen zu entnehmen, wobei die in der Regel ungleichmäßige Dickenverteilung des zur Herstellung der Blechlamellen verwendeten Elektroblechs ausgeglichen werden soll. Dies erfolgt dabei derart, dass aus der ungleichmäßigen Dickenverteilung resultierende Kippfehler im Rotorpaket vermieden werden. Hierzu wird ein gleichartig gerichtetes Stapeln der Blechlamellen umgangen, wobei die Blechlamellen bevorzugt um größere Winkel wie 90°-Winkel zueinander verdreht gestapelt werden. Dies gleicht die ungleichmäßige Dickenverteilung in den Blechlamellen aus.

Um einen solchen Winkelversatz beim Stapeln des Rotorpaketes einzuhalten und auch im gestapelten Rotorpaket gewährleisten zu können, werden in den Blechlamellen oftmals Justagehilfen eingebracht.

In dieser Hinsicht sind durch die US 4 445 272 A z. B. eine Vorrichtung sowie ein Verfahren zum Stapeln von Blechlamellen auf einer Rotorwelle bekannt. Die Vorrichtung weist dabei eine drehbar ausgeführte Matrize auf, in welche die aus einem Elektroblech ausgestanzten Blechlamellen auf die in der Matrize positionierte Rotorwelle aufstapelnd eingeführt werden. Die Blechlamellen werden beim Ausstanzen mit jeweils zwei Löchern und zwei Vorsprüngen zum Ausrichten der Blechlamellen versehen. Diese sind dabei um 90° zueinander versetzt. Um Löcher und Vorsprünge in Überdeckung zu bringen, wird die Matrize bei jedem Stanzvorgang um 90° gedreht.

Ist das Rotorpaket vollsymmetrisch ausgeführt, lassen sich die Blechlamellen wie in der US 4 445 272 A über einen einzelnen Stanzstempel erzeugen. Ist jedoch eine Schrägung im Rotorpaket vorzusehen, ist es regelmäßig notwendig, mehrere sich unterscheidende Stanzstempel in verschiedenen Stanzstufen vorzusehen, um Blechlamellen zu erzeugen, die einen sich in Abhängigkeit des Winkelversatzes zwischen den Segmenten des Rotorpakets unterscheidenden Relativwinkel zwischen Schlitzung und Justagehilfe aufweisen.

Die CN 2 03 850 942 U beschreibt eine mögliche Lösung, diese Problematik zu umgehen. Dabei offenbart die CN 2 03 850 942 U ein Rotorpaket eines Permanentmagnetmotors, welches axial in vier Segmente unterteilt ist und die Segmente dabei einen Winkelversatz zueinander aufweisen. In einer Ausführungsform wird die Gewährleistung des notwendigen Winkelversatzes zwischen den Segmenten und somit deren Ausrichtung gegenüber einander über in die Blechlamellen eingebrachte Justagelöcher realisiert, welche radial zu einer kreisrunden Mittenöffnung beabstandet sind. Dabei werden zwei Sätze an Justagelöchern zugleich, also mittels eines Stanzstempels, in die Blechlamellen eingebracht, wobei die Sätze einen sich unterscheidenden Relativwinkel zu zugehörigen Schlitzungen aufweisen. Durch Überlagerung eines gleichen Satzes lässt sich so eine Ausrichtung innerhalb eines Segments und durch Überlagerung unterschiedlicher Sätze eine Ausrichtung zwischen den Segmenten erreichen. Diese Ausgestaltung bedingt dabei jedoch ein Aufschrumpfen und somit eine kraftschlüssige Übertragung eines Drehmomentes zwischen Rotorpaket und Rotorwelle, was die Höhe des übertragbaren Drehmoments begrenzt. Elektrische Maschinen und hierbei insbesondere Elektromotoren mit derart ausgeführten Rotoren eignen sich in der Regel nicht zum Antrieb von Kraftfahrzeugen, da die übertragbaren Drehmomente zu gering sind.

Zur Übertragung höherer Drehmomente sind formschlüssige Verbindungen vorzuziehen. Auch hierzu wird durch die CN 2 03 850 942 U eine Ausführungsform beschrieben, wobei die Blechlamellen des Rotorpakets sich vom Umfang der Mittenöffnung radial nach innen erstreckende Zähne aufweisen. Die Zähne dienen dabei neben der Übertragung des Drehmoments auf die Rotorwelle zugleich als Justagehilfe. An jeder Blechlamelle sind hierfür vier Zähne vorgesehen, wobei jeweils ein Zahnpaar zweier sich gegenüberliegender Zähne einen Relativwinkel gegenüber einer zugeordneten Schlitzung zur Aufnahme von Permanentmagneten aufweisen. Die hierbei spitzen Relativwinkel der beiden Zahnpaare sind dabei in ihrer Höhe unterschiedlich gestaltet. Ferner werden aufeinanderfolgende Blechlamellen um 180° winkelversetzt zueinander im Rotorpaket ausgerichtet. So lässt sich das aus vier Segmenten bestehende Rotorpaket zwar aus identischen Blechlamellen erzeugen, jedoch formen die jeweils vier Zähne der Blechlamellen im Rotorpaket sechs in Längsrichtung des Rotorpakets verlaufende, teils unterbrochene Zahnreihen. Somit ist es in nachteiliger Weise notwendig, in der Rotorwelle auch sechs Nuten zur Aufnahme der Zahnreihen vorzusehen. Hierdurch ergibt sich ein hoher Bearbeitungsaufwand der Rotorwelle, welcher wiederum hohe Fertigungskosten bedingt.

Der US 2014 / 0 265 718 A1 ist darüber hinaus ein Rotorpaket sowie ein Verfahren zur Herstellung des Rotorpakets zu entnehmen. Das Rotorpaket weist dabei nach dessen Fertigstellung zwei sich gegenüberliegende Zahnreihen auf, welche in jeweils eine Nut einer Rotorwelle eingreifen sollen. Somit sind in der Rotorwelle im Vergleich zur CN 2 03 850 942 U auch lediglich zwei Nuten vorzusehen. Folglich weist jede Blechlamelle des Rotors zur Ausbildung der Zahnreihen zwei sich vom Umfang der Mittenöffnung radial nach innen erstreckende Zähne auf, welche während des Ausstanzprozesses der Blechlamellen ausgeformt werden. Hierfür ist in einer Weiterbildung des Verfahrens vorgesehen, dass zunächst über zwei hintereinander angeordnete und einer Ausstanzstufe vorgeordnete Stanzstufen zwei Lamellenvorstufen in dem auszustanzenden Elektroblech erzeugt werden, deren Zähne einen Relativwinkel von 90° zueinander aufweisen. Hierfür sind in nachteiliger Weise wiederum zwei sich voneinander unterscheidende Stanzstempel mit vier Teilwerkzeugen vorgesehen. Die Teilwerkzeuge sind dabei im Grunde gleichartig ausgebildet, weisen folglich jedoch einen Relativwinkel von 90° zueinander auf. Über die Teilwerkzeuge werden in jeweils einem Stanzschritt zwei die zwei gegenüberliegenden Zähne vorausformende Zahnausschnitte und zwei um 90° zu den Zahnausschnitten versetzt ausgeformte Leerausschnitte aus dem Elektroblech ausgestanzt, wobei die Ausformung der Mittenöffnung in diesen Stanzstufen noch nicht umfasst ist. Das Ausformen der Mittenöffnung erfolgt hingegen in einer sich unmittelbar anschließenden Stanzstufe, wobei der Stanzstempel dieser Stanzstufe über das Mittenloch sowie vier einen Relativwinkel von 90° zueinander aufweisenden Aussparungen verfügt, die derart positioniert sind, dass die jeweils zwei bereits vorgestanzten Zähne der Lamellenvorstufen unabhängig von ihrer Winkelausrichtung beim Ausstanzen des Mittenlochs nicht weiter bearbeitet werden. In einer abschließenden Stanzstufe wird die derart vorgestanzte Blechlamelle aus dem Elektroblech getrennt und teils um 90° gedreht, dass die Zähne der Blechlamellen fluchtend übereinanderliegen. Neben der bereits für sich genommen als nachteilig anzusehenden Verwendung zweier Stanzstempel zur Erzeugung der beiden Lamellenvorstufen birgt diese Ausgestaltung zudem den Nachteil, dass die aus den Lamellenvorstufen erzeugten Blechlamellen und hierbei insbesondere die Zähne der Blechlamellen aufgrund sich geringfügig unterscheidender Stanzstempel derart voneinander abweichende Toleranzen aufweisen, sodass über das Stapeln dieser Blechlamellen Maßhaltigkeitsfehler im Rotorpaket entstehen.

Vor diesem Hintergrund liegt der Erfindung die Aufgabe zugrunde, ein Verfahren der eingangs genannten Art derart auszuführen, dass die Möglichkeit eröffnet wird, eine Verringerung der zur Erzeugung der Blechlamellen notwendigen Stanzvorrichtungen respektive Stanzstufen zu gewährleisten und zugleich eine geringe Anzahl von Nuten in der Rotorwelle beibehalten werden kann.

Diese Aufgabe wird gelöst mit einem Verfahren gemäß den Merkmalen des Patentanspruchs 1. Die Unteransprüche betreffen besonders zweckmäßige Weiterbildungen der Erfindung.

Erfindungsgemäß ist also ein Verfahren zur Herstellung eines Rotorpakets eines Rotors einer elektrischen Maschine vorgesehen, wobei das Rotorpaket durch stapelndes Aneinanderreihen einer Vielzahl an in mehreren aufeinanderfolgenden Stanzstufen zumindest einer Stanzvorrichtung aus einem Elektroblech getrennten Rotorlamellen erzeugt wird. Hierfür werden über die Stanzstufen - hinweg -je zu erzeugender Rotorlamelle Behelfsöffnungen im Bereich eines Umfangs eines zentrischen Kernlochs der - zu erzeugenden - Rotorlamellen sowie zumindest eine sich vom Umfang des Kernlochs radial nach innen erstreckende Feder freigelegt. Es kann somit grundsätzlich eine beliebige Anzahl an Federn in den Rotorlamellen ausgeführt sein. Die Federn sind dabei bevorzugt zum Eingriff in eine Nut einer Rotorwelle des Rotors eingerichtet. Darüber hinaus eilt eine jede die Behelfsöffnungen freilegende Stanzstufe erfindungsgemäß einer das Kernloch freilegenden Stanzstufe vor, wobei das Freilegen oder Einbringen - von Behelfsöffnungen, Feder und Kernloch - durch Trennen mittels wenigstens eines Stanzwerkzeugs der Stanzvorrichtung in dem Elektroblech erfolgt. Es können folglich auch mehrere Stanzvorrichtungen zur Durchführung des Verfahrens vorgesehen sein. In bevorzugter Ausführung wäre jedoch lediglich eine Stanzvorrichtung mit einem Stanzwerkzeug vorgesehen, welche insbesondere als ein mehrere Stanzstufen aufweisendes Folgeverbundwerkzeug ausgebildet wäre. Weiterhin ist anzumerken, dass erfindungsgemäß eine jeweilige Rotorlamelle in einer Ausstanzstufe über ein Stanzwerkzeug der Stanzvorrichtung aus dem Elektroblech getrennt auf das Trennen - mittelbar oder unmittelbar - folgend zumindest eine Teilmenge der Rotorlamellen gedreht und die Rotorlamellen gestapelt werden. Das Drehen und/oder Stapeln der Rotorlamellen erfolgt dabei insbesondere in einer Matrize oder im Speziellen einer Rotationsmatrize der Stanzvorrichtung, wobei eine solche Matrize auch als Rotationsbremse bekannt ist. Zudem ist erfindungsgemäß vorgesehen, dass das in einer einzigen Federstanzstufe mittels eines Federstanzwerkzeugs - der Stanzvorrichtung - ausgeführte Freilegen einer jeden Feder getrennt von dem in einer einzigen Freistanzstufe mittels eines Freistanzwerkzeugs - der Stanzvorrichtung - ausgeführten Freilegen der Behelfsöffnungen erfolgt. Dabei eilt die Federstanzstufe der Freistanzstufe nach. Ferner fallen dabei alle in der Federstanzstufe über das Federstanzwerkzeug - potentiell - ausbildbaren Positionen einer jeder Feder mit in der Freistanzstufe über das Freistanzwerkzeug - potentiell - ausbildbaren Positionen der Behelfsöffnungen zusammen. Grundsätzlich würden somit in der Freistanzstufe zunächst die Behelfsöffnungen und auf diese mittelbar oder unmittelbar folgend in der Federstanzstufe eine jede Feder freigelegt. Die Bereiche oder Positionen im Elektroblech, in welchen dabei eine jede Feder freilegbar ist, deckt sich demnach mit den Bereichen oder Positionen, in welchen die Behelfsöffnungen freilegbar sind. Das Freilegen einer jeden Feder sowie der Behelfsöffnungen in jeweils einer einzigen Stanzstufe mittels jeweils eines einzigen Stanzwerkzeugs gewährleistet eine sehr hohe Positionstreue der Behelfsöffnungen sowie einer jeden Feder gegenüber einander. Darüber hinaus besteht der Vorteil, dass lediglich eine geringe Anzahl an Nuten, z. B. zwei oder gar lediglich eine Nut, in einer Rotorwelle vorzusehen sind und trotzdem lediglich eine geringe Anzahl an Stanzwerkzeugen zur Erzeugung unterschiedlicher Rotorlamellen vorgesehen werden müssen.

Das Drehen einer Rotorlamelle sollte zudem um eine erste Drehachse normal zur und/oder um eine sich von der ersten Drehachse unterscheidende zweite Drehachse in der Ebene der Rotorlamelle erfolgen. Die erste Drehachse und die zweite Drehachse liegen hierbei senkrecht aufeinander, wobei die erste normal zur Ebene der Rotorlamelle gerichtete Drehachse parallel zur Längsachse des Rotorpakets verläuft respektive mit dieser Längsachse zusammenfällt. Das mögliche Drehen um die zweite in der Ebene und hierbei insbesondere mittig durch die Rotorlamelle verlaufende Drehachse ist auch als Wenden der Rotorlamellenvorstufe oder der Rotorlamelle zu betrachten. So lassen sich die Rotorlamellen durch das Drehen um die erste und/oder die zweite Drehachse überaus gewinnbringend gegenüber einander ausrichten, sodass insbesondere die Federn der Rotorlamellen in - ausschließlich - einer Federreihe zueinander fluchtend angeordnet sind.

In einer besonders vorteilhaften Weiterbildung der Erfindung weist eine jede in der Federstanzstufe freizulegende und/oder freigelegte Feder eine durch die - potentiell - ausbildbaren Positionen umfasste Federsollposition auf, wobei diese die durch die - potentiell - ausbildbaren Positionen umfassten Öffnungssollpositionen der in der Freistanzstufe freizulegenden und/oder freigelegten Behelfsöffnungen bestimmt. Die Federsollposition einer jeden Feder ergibt sich demnach durch die Öffnungssollpositionen der in der Freistanzstufe freigelegten Behelfsöffnungen. Dabei können die Öffnungssollpositionen und somit die Federsollposition einer jeden Feder eine oder mehrere der über das Freistanzwerkzeug sowie das Federstanzwerkzeug - potentiell - ausbildbaren Positionen ausfüllen. Vorteilhaft müssen hierbei lediglich die Öffnungssollpositionen festgelegt werden, an welche in der Freistanzstufe die Behelfsöffnungen freigelegt werden. Die Federsollposition einer jeden Feder und somit die Position einer jeden Feder nach ihrem Freilegen innerhalb der durch das Federstanzwerkzeug - potentiell - ausbildbaren Positionen erfolgt damit gewinnbringend in Abhängigkeit der in den Öffnungssollpositionen freigelegten Behelfsöffnungen, wodurch eine vereinfachte Gestaltung des Federstanzwerkzeugs ermöglicht wird.

In einer darüber hinaus als vielversprechend anzusehenden Ausführungsform des Verfahrens ist zudem vorgesehen, dass die in der Freistanzstufe in Öffnungssollposition freizulegenden Behelfsöffnungen mittels eines trennvariablen Freistanzwerkzeugs positionsselektiv, also für jede - potentiell - ausbildbare Position einer Behelfsöffnung im Einzelnen ermöglichend, freigelegt werden. Hierdurch lässt sich eine ohne trennvariables Freistanzwerkzeug notwendige Anordnung mehrerer Freistanzwerkzeuge, welche insbesondere jeweils lediglich eine Behelfsöffnung oder einen Teil der Behelfsöffnungen entfernen, gewinnbringend vermeiden. Dies steigert einerseits die Taktzeit und senkt zugleich die Fertigungskosten sowie den Platzbedarf der Stanzvorrichtung.

Eine Gestaltungsform der Erfindung lässt sich ferner dann als gewinnbringend beschreiben, wenn eine jede in der Federstanzstufe in Federsollposition freizulegende Feder mittels eines trenninvariablen Federstanzwerkzeugs freigelegt wird, welches Teilbereiche oder Teilwerkzeuge aufweist, die alle - potentiell - ausbildbaren Positionen einer jeden Feder abdecken und sich stets - also entsprechend bei jedem Trennvorgang - in Eingriff befinden. Folglich laufen sich mit in Öffnungssollposition befindlichen und somit in der Freistanzstufe bereits freigelegten Behelfsöffnungen überdeckende Teilbereiche des Federstanzwerkzeugs entsprechend ins Leere, sodass im Bereich der sich in Öffnungssollposition befindlichen Behelfsöffnungen keine Federn freigelegt werden. Lediglich in den Bereichen der Federsollposition wird über das trenninvariable Federstanzwerkzeug eine Feder im Elektroblech freigelegt. Dies bietet den Vorteil einer stets gleichbleibenden Ausrichtung der Federn in den jeweilig getrennten respektive erzeugten Rotorlamellen gegenüber einander, wobei diese Ausrichtung bei einem Freilegen in mehreren Stanzstufen mit mehreren Stanzwerkzeugen einer Variation unterliegen kann. So kann bei einem Drehen der Rotorlamellen über die derart freigelegten Federn stets eine präzise Ausrichtung der Rotorlamellen gegenüber einander gewährleistet werden. Gegebenenfalls in den Rotorlamellen ebenfalls durch Trennen freigelegte Ausnehmungen, welche im Rotorpaket Schlitzungen zur Aufnahme von Dauermagneten bilden sollen, würden somit ebenfalls überaus präzise miteinander fluchten, sodass eine eventuell vorzusehende Nachbearbeitung der Schlitzungen entfallen kann.

Als günstig stellt sich eine Ausbildung des erfindungsgemäßen Verfahrens ferner dann dar, wenn die Federsollposition jeder in der Federstanzstufe freizulegenden und/oder freigelegten Feder und somit die Öffnungssollpositionen der in der Freistanzstufe freizulegenden und/oder freigelegten Behelfsöffnungen im Laufe des Verfahrens über die potentiell ausbildbaren Positionen einer jeden Feder sowie der Behelfsöffnungen wechseln. Ein solcher Wechsel würde damit zumindest einmal insbesondere im Laufe der Herstellung eines Rotorpakets erfolgen. Hierbei würden eine jede Feder sowie die Behelfsöffnungen nach dem Wechsel eine Federsoll- respektive eine Öffnungssollposition aufweisen, welche sich folgerichtig von der Federsoll- respektive Öffnungssollposition vor dem Wechsel unterscheidet. Daraus folgend würde sich somit auch die Position der Behelfsöffnungen sowie einer jeden Feder innerhalb der - potentiell - ausbildbaren Positionen in den getrennten Rotorlamellen nach einem Wechsel der Feder- sowie der Öffnungssollpositionen gegenüber der Position der Behelfsöffnungen sowie einer jeden Feder innerhalb der - potentiell - ausbildbaren Positionen vor einem Wechsel unterscheiden. Durch einen solchen Wechsel der Sollpositionen kann es vorteilhaft ermöglicht werden, bei Bedarf eine ungleichmäßige Dickenverteilung des zur Herstellung der Rotorlamellen verwendeten Elektroblechs auszugleichen, welche in den Rotorlamellen zu einer Dickenabweichung führen und in Kippfehlern innerhalb des Rotorpakets resultieren würde. Denkbar wäre in diesem Zusammenhang, die Dickenverteilung des Elektroblechs insbesondere beim Erzeugen einer Rotorlamellenvorstufe zu bestimmen, bevorzugt zu vermessen und die Feder- und/oder Öffnungssollpositionen in Abhängigkeit der Dickenverteilung festzulegen.

In einer weiteren mit Vorteil behafteten Ausbildung der Erfindung ist es angedacht, dass die Federsollposition einer jeden in der Federstanzstufe freizulegenden und/oder freigelegten Feder und somit die Öffnungssollpositionen der in der Freistanzstufe freizulegenden und/oder freigelegten Behelfsöffnungen in jeweils aufeinanderfolgenden Trennvorgängen über die - potentiell - ausbildbaren Positionen einer jeden Feder sowie der Behelfsöffnungen wechseln. So ließe sich insbesondere auch ohne eine Bestimmung der Dickenverteilung des zum Erzeugen der Rotorlamellenvorstufen verwendeten Elektroblechs eine vorliegende ungleichmäßige Dickenverteilung ausgleichen und somit die Entstehung eines Kippfehlers im Rotorpaket vermeiden. Die in den Rotorlamellen vorherrschenden Dickenabweichungen würden sich folglich über die Vielzahl der im Rotorpaket gestapelten Rotorlamellen ausgleichen.

Die Erfindung weiterbildend ist es darüber hinaus als Erfolg versprechend anzusehen, wenn die Federsollposition einer jeden in der Federstanzstufe freizulegenden Feder und somit die Öffnungssollpositionen der in der Freistanzstufe freizulegenden und/oder freigelegten Behelfsöffnungen in jeweils aufeinanderfolgenden Trennvorgängen schrittweise umlaufend auf eine in Umfangsrichtung des Kernlochs unmittelbar benachbarte - potentiell - ausbildbare Position einer jeden Feder sowie der Behelfsöffnungen wechseln. Neben einer ungleichmäßigen Dickenverteilung des zum Erzeugen der Rotorlamellen verwendeten Elektroblechs ließen sich aufgrund des stetigen, regelmäßigen Wechsels der Sollposition überaus gewinnbringend auch eine aufgrund des Walzprozesses im Elektroblech entstehende magnetische Vorzugsrichtung ausgleichen und so ein ruhiger Lauf der elektrischen Maschine sicherstellen.

Ferner ist auch eine Ausgestaltung der Erfindung dahingehend möglich, dass das trennvariable Freistanzwerkzeug eine Anzahl an Teilwerkzeugen aufweist, die einer Anzahl an Öffnungssollpositionen der freizulegenden Behelfsöffnungen entspricht. Dabei ist oder sind die Teilwerkzeuge und/oder das Freistanzwerkzeug als solches drehbar ausgeführt und die Teilwerkzeuge des trennvariablen Freistanzwerkzeugs werden zum Freilegen der Behelfsöffnungen durch Drehen in Überdeckung mit den festgelegten Öffnungssollpositionen gebracht. Über eine solche Ausgestaltung ließe sich in vorteilhaft einfacher Weise ein trennvariables Stanzwerkzeug bereitstellen, mit welchem die Behelfsöffnungen in der Freistanzstufe positionsselektiv aus dem Elektroblech entfernbar wären.

In einer zur vorgenannten Weiterbildung abweichenden, jedoch nicht minder vorteilhaften Ausführungsform der Erfindung weist das trennvariable Freistanzwerkzeug über Koppelelemente in Eingriff bringbare Teilwerkzeuge auf, welche alle - potentiell - ausbildbare Positionen der Behelfsöffnungen abdecken, und zum Freilegen der Behelfsöffnungen die sich in Überdeckung mit den festgelegten Öffnungssollpositionen befindlichen Teilwerkzeuge in Eingriff gebracht werden. Bei den Koppelelementen könnte es sich beispielsweise um Schieber handeln, welche dem Elektroblech abgewandt, unterhalb der Teilwerkzeuge angeordnet und zwischen einer Nichteingriffsstellung und einer Eingriffsstellung verfahrbar ausgeführt sind. Ein Verfahren eines Schiebers in die Eingriffsstellung und somit zwischen eines der Teilwerkzeuge und einen Werkzeugunterbau des Stanzwerkzeugs würde das zugeordnete Teilwerkzeug folglich in Eingriff bringen. Sich nicht im Eingriff und somit in Nichteingriffsstellung befindliche Teilwerkzeuge wären gegenüber sich im Eingriff und somit in Eingriffsstellung befindlichen Teilwerkzeugen rückversetzt angeordnet, wodurch ein Trennen durch diese sich nicht im Eingriff befindlichen Teilwerkzeuge verhindert wird.

Die Anzahl an - potentiell - ausbildbaren Positionen der Behelfsöffnungen sowie der Federn, welche folglich auch der Summe der freigelegten Behelfsöffnungen und Federn entspricht, wäre grundsätzlich beliebig. In bevorzugter Weise richtet sich diese jedoch nach der Anzahl der Pole respektive der Polpaarzahl des Rotors oder der elektrischen Maschine, welcher oder welche ein nach dem erfindungsgemäßen Verfahren erzeugtes Rotorpaket aufweist. Hierbei sollte die Anzahl an - potentiell - ausbildbaren Positionen der Behelfsöffnungen sowie der Federn respektive die Summe der freigelegten Behelfsöffnungen und Federn der Polpaarzahl und somit der Hälfte der Pole entsprechen. Bei einer Gleichverteilung von Behelfsöffnungen und Federn in Umfangsrichtung des Kernlochs läge zudem ein Winkelversatz von 360° geteilt durch die Polpaarzahl zwischen den - potentiell - ausbildbaren Positionen und somit den Behelfsöffnungen und/oder einer jeden Feder vor. Beispielsweise ergäben sich bei einer Sechspolmaschine mit drei Polpaaren somit drei - potentiell - ausbildbare Positionen sowie ein Winkelversatz von 120°. Bei einer Achtpolmaschine mit vier Polpaaren lägen hingegen vier - potentiell - ausbildbare Positionen und ein Winkelversatz von 90° vor.

In diesem Zusammenhang besteht eine weitere vorteilhafte Ausgestaltung der Erfindung zudem darin, dass ausschließlich drei Behelfsöffnungen und/oder ausschließlich eine Feder freigelegt werden, welche in eine Umfangsrichtung des - freizulegenden und/oder freigelegten - Kernlochs gleichmäßig verteilt positioniert sind. So lässt sich in gewinnbringender Weise ein Rotorpaket - für eine Achtpolmaschine - erzeugen, welches eine quasi optimale Ausgewogenheit zwischen Fertigungsaufwand und den mit diesem zusammenhängenden Fertigungskosten und einem das Rotorpaket aufweisenden Rotor, der in einer elektrischen Maschine geringe Rastmomente und somit eine geringe Drehmomentenwelligkeit verbunden mit einer hohen Laufruhe aufweist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Vorgehensweise bei der Durchführung des erfindungsgemäßen Verfahrens;
- Fig. 2: Rotorlamellen mit sich in unterschiedlichen Federsollpositionen befindlichen Federn;
- Fig. 3: ein Rotorpaket respektive ein Segment eines Rotorpakets;
- Fig. 4: eine Detaildarstellung einer aus mehreren Federn bestehenden Federreihe.

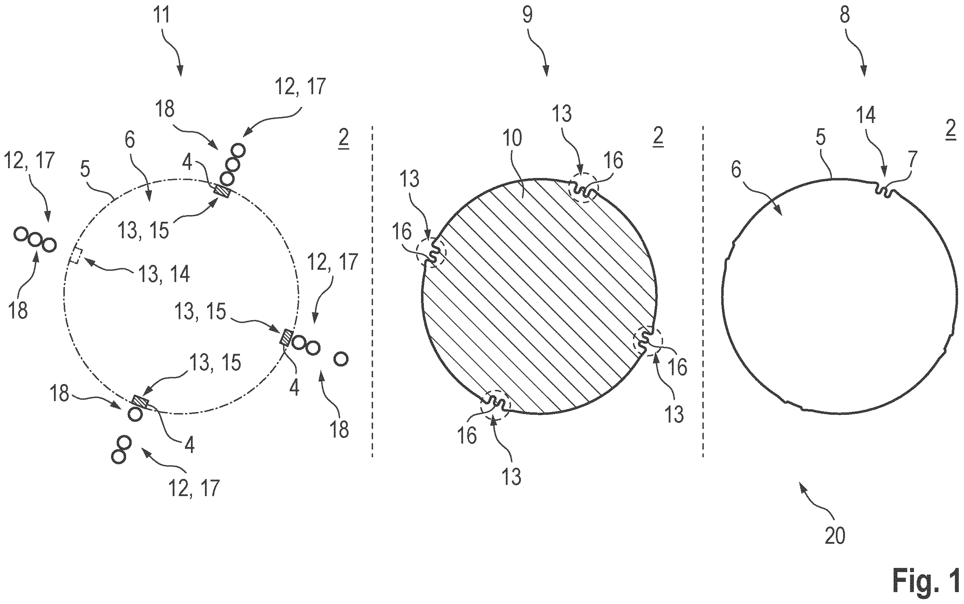

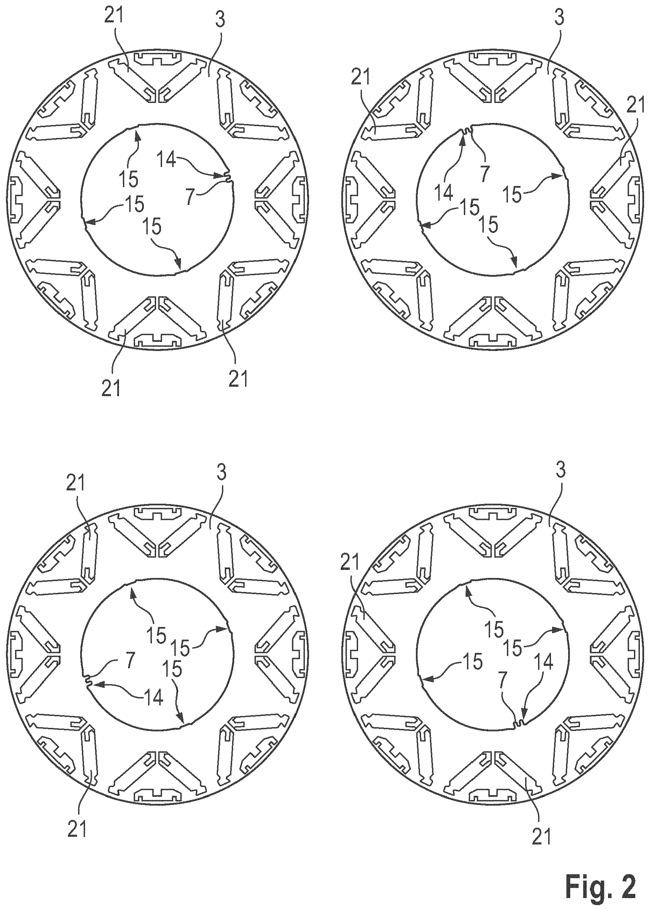

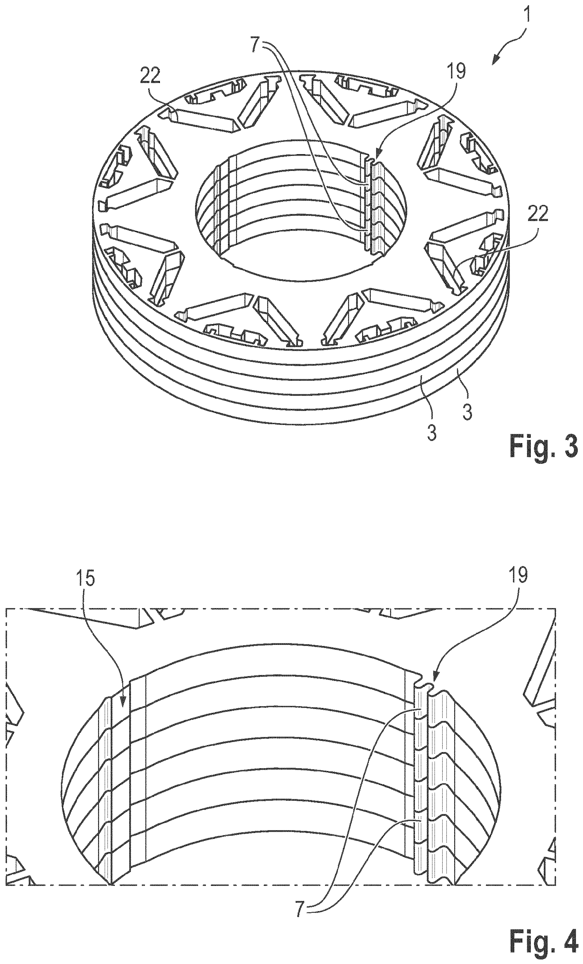

Aus der schematisch stark vereinfachten Figur 1 geht die grundsätzliche Vorgehensweise bei der Durchführung des erfindungsgemäßen Verfahrens zur Herstellung eines insbesondere in Figur 3 dargestellten Rotorpakets 1 hervor. Das Rotorpaket 1 wird hierbei durch stapelndes Aneinanderreihen einer Vielzahl an in mehreren aufeinanderfolgenden Stanzstufen 8, 9, 11 der vereinfacht dargestellten Stanzvorrichtung 20 aus einem Elektroblech 2 getrennten und in Figur 2 näher dargestellten Rotorlamellen 3 erzeugt. Hierfür werden je zu erzeugender Rotorlamelle 3 über die Stanzstufen 8, 9, 11 hinweg die Behelfsöffnungen 4 im Bereich eines Umfangs 5 eines zentrischen Kernlochs 6 der Rotorlamellen 3, die sich vom Umfang 5 des Kernlochs 6 radial nach innen erstreckende Feder 7 sowie das Kernloch 6 selbst freigelegt. Hierbei eilt die die Behelfsöffnungen 4 freilegende Freistanzstufe 11 der das Kernloch 6 freilegenden Stanzstufe, hier der Federstanzstufe 9, vor. Aus diesem Grund ist das Kernloch 6 in der Freistanzstufe 11 folglich noch nicht freigelegt und lediglich über Strichlinien angedeutet. Das Freilegen der Behelfsöffnungen 4 erfolgt entsprechend in Bereichen, in welchen der Umfang 5 des Kernlochs 6 nach dessen Freilegen in der der Freistanzstufe 11 nacheilenden Federstanzstufe 9 ausgeformt sein wird. Das Freilegen der Behelfsöffnungen 4, der Feder 7 sowie des Kernlochs 6 in dem Elektroblech 2 erfolgt dabei durch Trennen mittels mehrerer Stanzwerkzeuge, hier dem Freistanzwerkzeug 12 und dem Federstanzwerkzeug 10 der Stanzvorrichtung 20. Das in der Federstanzstufe 9 mittels des Federstanzwerkzeugs 10 ausgeführte Freilegen der Feder 7 erfolgt, wie der Figur 1 zu entnehmen ist, getrennt von dem in der Freistanzstufe 11 mittels des Freistanzwerkzeugs 12 ausgeführten Freilegens der Behelfsöffnungen 4, wobei alle in der Federstanzstufe 9 über das Federstanzwerkzeug 10 ausbildbaren Positionen 13 einer jeder Feder 7 mit in der Freistanzstufe 11 über das Freistanzwerkzeug 12 ausbildbaren Positionen 13 der Behelfsöffnungen 4 zusammenfallen. Ferner weist die in der Federstanzstufe 9 freizulegende und/oder freigelegte Feder 7 eine durch die ausbildbaren Positionen 13 umfasste Federsollposition 14 auf. Diese Federsollposition 14 bestimmt dabei die Öffnungssollpositionen 15 der in der Freistanzstufe 11 freizulegenden und/oder freigelegten Behelfsöffnungen 4. Die Federsollposition 14 sowie auch die Öffnungssollpositionen 15 können dabei eine jede der über das Federstanzwerkzeug 10 oder das Freistanzwerkzeug 12 ausbildbaren Positionen 13 einnehmen. Hierzu zeigt Figur 1 in der Freistanzstufe 11 vier ausbildbare Positionen 13, wobei in lediglich drei der ausbildbaren Positionen 13 Behelfsöffnungen 4 freigelegt sind. Diese drei Positionen 13 stellen dabei die Öffnungssollpositionen 15 dieser Behelfsöffnungen 4 dar. Die weitere ausbildbare Position 13, an welcher jedoch keine Behelfsöffnung 4 freigelegt ist, ist durch eine gestrichelte Linienführung dargestellt. Dabei ist im Speziellen vorgesehen, dass sich die Federsollposition 14 der Feder 7 und somit die Öffnungssollpositionen 15 der Behelfsöffnungen 4 in jeweils aufeinanderfolgenden Trennvorgängen über die ausbildbaren Positionen 13 wechseln. Dadurch wird die Feder 7 der in der Ausstanzstufe 8 je aufeinanderfolgend getrennten Rotorlamellen 3 in einer anderen der ausbildbaren Positionen 13 freigelegt. So lassen sich eine ungleichmäßige Dickenverteilung des zum Erzeugen der Rotorlamellen 3 verwendeten Elektroblechs 2 wie auch eine aufgrund des Walzprozesses im Elektroblech 2 entstehende magnetische Vorzugsrichtung im Rotorpaket 1 ausgleichen. Um den Wechsel der Federsollposition 14 respektive der Öffnungssollpositionen 15 zu realisieren, werden die in der Freistanzstufe 11 in Öffnungssollposition 15 freizulegenden Behelfsöffnungen 4 positionsselektiv freigelegt. Hierfür ist das Freistanzwerkzeug 12 trennvariabel ausgeführt und weist über Koppelelemente 18 in Eingriff bringbare Teilwerkzeuge 17 auf. Diese decken alle ausbildbaren Positionen 13 der Behelfsöffnungen 4 ab, wobei zum Freilegen der Behelfsöffnungen 4 die sich in Überdeckung mit den festgelegten Öffnungssollpositionen 15 befindlichen drei Teilwerkzeuge 17 in Eingriff gebracht werden. Das zum Freilegen der sich in Federsollposition 14 befindlichen Feder 7 wird hingegen mittels des Federstanzwerkzeugs 10 freigelegt, welches hierbei trenninvariabel ausgeführt ist. Das trenninvariable Federstanzwerkzeug 10 weist dabei die Form der Feder 7 ausbildende Teilwerkzeuge 16 auf, die alle ausbildbaren Positionen 13 einer jeden Feder 7 abdecken und sich stets in Eingriff befinden. Folglich laufen sich mit in Öffnungssollposition 15 befindlichen und somit in der Freistanzstufe 11 bereits freigelegten Behelfsöffnungen 4 überdeckende Teilwerkzeuge 16 des trenninvariablen Federstanzwerkzeugs 10 entsprechend ins Leere, sodass im Bereich der sich in Öffnungssollposition 15 befindlichen Behelfsöffnungen 4 keine Federn 7 freigelegt werden. Lediglich in den Bereichen der Federsollposition 14 wird über das trenninvariable Federstanzwerkzeug 10 eine Feder 7 im Elektroblech 2 freigelegt. In der Darstellung der Figur 1 ist in der Ausstanzstufe 8 am Umfang 5 des Kernlochs 6 somit lediglich eine Feder 7 ausgebildet. Dabei unterscheidet sich diese Federsollposition 14 der Feder 7 aufgrund des Wechsels der Federsollpositionen 14 von der Federsollposition 14 in der Freistanzstufe 11. Auf das Freilegen folgend wird eine jeweilige Rotorlamelle 3 in der Ausstanzstufe 8 über ein nicht näher aufgezeigtes Stanzwerkzeug der Stanzvorrichtung 20 aus dem Elektroblech 2 getrennt und auf das Trennen folgend zumindest eine Teilmenge der Rotorlamellen 3 gedreht und die Rotorlamellen 3 gestapelt. In der Darstellung der Figur 1 ist das Ausstanzen der Rotorlamelle 3 jedoch noch nicht erfolgt.

Aus Figur 2 gehen nun Rotorlamellen 3 hervor, welche über das in Figur 1 aufgezeigte erfindungsgemäße Verfahren erzeugbar sind und somit nach dem Trennen in der Ausstanzstufe 8 vorliegen. Die Rotorlamellen 3 weisen dabei jeweils eine sich in einer von vier unterschiedlichen Federsollpositionen 14 befindliche Feder 7 auf. Diese Federn 7 sind am Umfang 5 des Kernlochs 6 mit einem Winkelversatz von 90° zueinander versetzt freigelegt. Ferner lassen sich die Öffnungssollpositionen 15 der zuvor in der Freistanzstufe 11 erzeugten Behelfsöffnungen 4 erkennen, in denen in der Federstanzstufe 9 entsprechend keine Feder 7 freigelegt wurde. Durch Drehen dieser Rotorlamellen 3 in der Form, dass die jeweiligen Federn 7 der Rotorlamellen 3 miteinander fluchten und dadurch eine in Figur 3 aufgezeigte Federreihe 19 bilden, lassen sich Dickenvariationen sowie unterschiedliche magnetische Vorzugsrichtungen innerhalb der Rotorlamellen 3 ausgleichen und ebenfalls in Figur 3 dargestellte Rotorpakete 1 mit einer hohen Laufruhe erzeugen. Auch die in den Rotorlamellen 3 durch Trennen freigelegten Ausnehmungen 21, welche im Rotorpaket 1 Schlitzungen 22 zur Aufnahme von Dauermagneten bilden, fluchten somit ebenfalls überaus präzise miteinander, sodass eine eventuell vorzusehende Nachbearbeitung der Schlitzungen 22 entfallen kann. Die aus den Ausnehmungen 21 gebildeten Schlitzungen 22 sind in Figur 3 näher dargestellt.

Figur 3 zeigt dabei einen Teil respektive ein Segment eines aus mehreren Rotorlamellen 3 bestehenden Rotorpakets 1, in welchem die aus den Federn 7 gebildete Federreihe 19 sowie die aus den in Figur 2 dargestellten Ausnehmungen 21 geformten Schlitzungen 22 ausgebildet sind. Über das Drehen und/oder ein Wenden der Rotorlamellen 3 lassen sich aufgrund unterschiedlicher Schrägungswinkel zwischen den in Figur 2 aufgezeigten Ausnehmungen 21 und den Federn 7 zudem Rotorpakete 1 erzeugen, welche Segmente mit sich voneinander unterscheidender Schrägung aufweisen, wodurch sich eine Drehmomentenwelligkeit einer elektrischen Maschine minimieren lässt.

Figur 4 beschreibt zudem eine Detaildarstellung der aus einer Vielzahl von Federn 7 gebildeten Federreihe 19. In Figur 4 ist zudem nochmals deutlich eine Öffnungssollposition 15 zu erkennen, in welcher aufgrund des Freilegens der in Figur 1 aufgezeigten Freistanzstufe 11 keine Federn 7 und somit keine Federreihe 19 ausgebildet wurde.

### Bezugszeichenliste

- 1: Rotorpaket
- 2: Elektroblech
- 3: Rotorlamelle
- 4: Behelfsöffnung
- 5: Umfang

- 6: Kernloch
- 7: Feder
- 8: Ausstanzstufe
- 9: Federstanzstufe
- 10: Federstanzwerkzeug

- 11: Freistanzstufe
- 12: Freistanzwerkzeug
- 13: ausbildbare Position
- 14: Federsollposition
- 15: Öffnungssollposition

- 16: Teilwerkzeug
- 17: Teilwerkzeug
- 18: Koppelelement
- 19: Federreihe
- 20: Stanzvorrichtung

- 21: Ausnehmung
- 22: Schlitzung

## Patentansprüche

1. Verfahren zur Herstellung eines Rotorpakets (1) eines Rotors einer elektrischen Maschine, wobei das Rotorpaket (1) durch stapelndes Aneinanderreihen einer Vielzahl an in mehreren aufeinanderfolgenden Stanzstufen (8, 9, 11) zumindest einer Stanzvorrichtung (20) aus einem Elektroblech (2) getrennten Rotorlamellen (3) erzeugt wird, hierfür über die Stanzstufen (8, 9, 11) je zu erzeugender Rotorlamelle (3) Behelfsöffnungen (4) im Bereich eines Umfangs (5) eines zentrischen Kernlochs (6) der Rotorlamellen (3) sowie zumindest eine sich vom Umfang (5) des Kernlochs (6) radial nach innen erstreckende Feder (7) freigelegt werden, hierbei eine jede die Behelfsöffnungen (4) freilegende Stanzstufe (11) einer das Kernloch (6) freilegenden Stanzstufe (9) voreilt, wobei das Freilegen durch Trennen mittels wenigstens eines Stanzwerkzeugs (10, 12) der Stanzvorrichtung (20) in dem Elektroblech (2) erfolgt, eine jeweilige Rotorlamelle (3) in einer Ausstanzstufe (8) über ein Stanzwerkzeug der Stanzvorrichtung (20) aus dem Elektroblech (2) getrennt und auf das Trennen folgend zumindest eine Teilmenge der Rotorlamellen (3) gedreht und die Rotorlamellen (3) gestapelt werden, **dadurch gekennzeichnet, dass** das in einer einzigen Federstanzstufe (9) mittels eines Federstanzwerkzeugs (10) ausgeführte Freilegen einer jeden Feder (7) getrennt von dem in einer einzigen Freistanzstufe (11) mittels eines Freistanzwerkzeugs (12) ausgeführten Freilegen der Behelfsöffnungen (4) erfolgt, wobei die Federstanzstufe (9) der Freistanzstufe (11) nacheilt und alle in der Federstanzstufe (9) über das Federstanzwerkzeug (10) ausbildbaren Positionen (13) einer jeder Feder (7) mit in der Freistanzstufe (11) über das Freistanzwerkzeug (12) ausbildbaren Positionen (13) der Behelfsöffnungen (4) zusammenfallen.

2. Verfahren nach Anspruch 1, **dadurch gekennzeichnet, dass** eine jede in der Federstanzstufe (9) freizulegende und/oder freigelegte Feder (7) eine durch die ausbildbaren Positionen (13) umfasste Federsollposition (14) aufweist, wobei diese die durch die ausbildbaren Positionen (13) umfassten Öffnungssollpositionen (15) der in der Freistanzstufe (11) freizulegenden und/oder freigelegten Behelfsöffnungen (4) bestimmt.

3. Verfahren nach den Ansprüchen 1 oder 2, **dadurch gekennzeichnet, dass** die in der Freistanzstufe (11) in Öffnungssollposition (15) freizulegenden Behelfsöffnungen (4) mittels eines trennvariablen Freistanzwerkzeugs (12) positionsselektiv freigelegt werden.

4. Verfahren nach zumindest einem der vorangehenden Ansprüche, **dadurch gekennzeichnet, dass** eine jede in der Federstanzstufe (9) in Federsollposition (14) freizulegende Feder (7) mittels eines trenninvariablen Federstanzwerkzeugs (10) freigelegt wird, welches Teilbereiche oder Teilwerkzeuge (16) aufweist, die alle ausbildbaren Positionen (13) einer jeden Feder (7) abdecken und sich stets in Eingriff befinden.

5. Verfahren nach zumindest einem der vorangehenden Ansprüche, **dadurch gekennzeichnet, dass** die Federsollposition (14) jeder Feder (7) und somit die Öffnungssollpositionen (15) der Behelfsöffnungen (4) im Laufe des Verfahrens über die ausbildbaren Positionen (13) wechseln.

6. Verfahren nach zumindest einem der vorangehenden Ansprüche, **dadurch gekennzeichnet, dass** die Federsollposition (14) einer jeden Feder (7) und somit die Öffnungssollpositionen (15) der Behelfsöffnungen (4) in jeweils aufeinanderfolgenden Trennvorgängen über die ausbildbaren Positionen (13) wechseln.

7. Verfahren nach zumindest einem der vorangehenden Ansprüche, **dadurch gekennzeichnet, dass** die Federsollposition (14) einer jeden Feder (7) und somit die Öffnungssollpositionen (15) der Behelfsöffnungen (4) in jeweils aufeinanderfolgenden Trennvorgängen schrittweise umlaufend jeweils auf eine in Umfangsrichtung des Kernlochs (6) unmittelbar benachbarte ausbildbare Position (13) wechseln.

8. Verfahren nach zumindest einem der vorangehenden Ansprüche, **dadurch gekennzeichnet, dass** das trennvariable Freistanzwerkzeug (12) eine Anzahl an Teilwerkzeugen (17) aufweist, die einer Anzahl an Öffnungssollpositionen (15) der freizulegenden Behelfsöffnungen (4) entspricht, wobei die Teilwerkzeuge (17) und/oder das trennvariable Freistanzwerkzeug (12) als solches drehbar ausgeführt ist oder sind und die Teilwerkzeuge (17) des trennvariablen Freistanzwerkzeugs (12) zum Freilegen der Behelfsöffnungen (4) durch Drehen in Überdeckung mit den festgelegten Öffnungssollpositionen (15) gebracht werden.

9. Verfahren nach zumindest einem der vorangehenden Ansprüche, **dadurch gekennzeichnet, dass** das trennvariable Freistanzwerkzeug (12) über Koppelelemente (18) in Eingriff bringbare Teilwerkzeuge (17) aufweist, welche alle ausbildbaren Positionen (13) der Behelfsöffnungen (4) abdecken und zum Freilegen der Behelfsöffnungen (4) die sich in Überdeckung mit den festgelegten Öffnungssollpositionen (15) befindlichen Teilwerkzeuge (17) in Eingriff gebracht werden.

10. Verfahren nach zumindest einem der vorangehenden Ansprüche, **dadurch gekennzeichnet, dass** ausschließlich drei Behelfsöffnungen (4) und/oder ausschließlich eine Feder (7) freigelegt werden, welche in eine Umfangsrichtung des Kernlochs (6) gleichmäßig verteilt positioniert sind.
